Europäisches Patentamt

European Patent Office

Office européen des brevets

(19)

(11) Veröffentlichungsnummer: **0 390 128 B1**

(12) # EUROPÄISCHE PATENTSCHRIFT

(45) Veröffentlichungstag der Patentschrift:
04.12.91 Patentblatt 91/49

(51) Int. Cl.$^5$: **E04G 25/06**

(21) Anmeldenummer: **90105954.3**

(22) Anmeldetag: **28.03.90**

(54) Längenveränderliche Teleskopstütze.

(30) Priorität: **30.03.89 DE 3910344**

(43) Veröffentlichungstag der Anmeldung:
**03.10.90 Patentblatt 90/40**

(45) Bekanntmachung des Hinweises auf die
Patenterteilung:
**04.12.91 Patentblatt 91/49**

(84) Benannte Vertragsstaaten:
**DE ES FR GB IT**

(56) Entgegenhaltungen:
**DE-U- 8 232 446**
**FR-A- 2 508 958**

(73) Patentinhaber: **Peri-Werk Artur Schwörer
GmbH & Co.KG
Rudolf-Diesel-Strasse
W-7912 Weissenhorn (DE)**

(72) Erfinder: **Schwörer, Artur
Am Waldblick 7
W-7913 Senden (DE)**

(74) Vertreter: **Dipl.-Phys.Dr. Manitz Dipl.-Ing.,
Dipl.-W.-Ing. Finsterwald Dipl.-Ing. Grämkow
Dipl.-Chem.Dr. Heyn Dipl.-Phys. Rotermund
Morgan, B.Sc.(Phys.) Robert-Koch-Strasse 1
W-8000 München 22 (DE)**

**Beschreibung**

Die Erfindung betrifft eine längenveränderliche, auf Druck beanspruchbare Teleskopstütze nach dem Oberbegriff des Patentanspruchs 1, wie sie insbesondere zur Abstützung von Schalungen wie Deckenschalungen an einer festen Abstützfläche wie dem Boden verwendet werden. Durch Verdrehen der Abstützhülse ist eine Schnellabsenkung der ausgefahrenen Teleskopstütze möglich, die mit der Stellmutter wegen des flachen Gewindes und der dadurch bedingten Selbsthemmung nicht erreichbar ist.

Bekannte derartige Teleskopstützen (DE-A-2620668, DE-B-29333510, DE-U-8232446) werden zunächst durch Ausziehen des Innenrohrs aus dem Außenrohr grob auf die für die Halterung einer bestimmten Deckenschalung erforderliche Länge ausgezogen, worauf dann der Bolzenriegel durch das Langloch in die dafür vorgesehene Ausnehmung des Innenrohrs eingesteckt wird. Der Bolzenriegel stützt sich dabei auf dem oberen Rand der Absenkhülse ab. Nunmehr kann die Absenkhülse durch Verdrehen der Verstellmutter so weit angehoben werden, bis die Teleskopstütze die erforderliche Länge erreicht hat. Die Teleskopstütze ist dann für die Halterung einer in einem bestimmten Abstand vom Boden anzuordnenden Schalung bereit.

Bei einer Teleskopstütze der eingangs genannten Gattung (DE-U-8232446) ist die Absenkhülse in der Ausfahrposition, bei der der Bolzenriegel auf dem Ausfahr-Abstützbereich aufliegt, durch einen Umfangsanschlag in derjenigen Richtung drehverriegelt, in der die Stellmutter zum weiteren Ausfahren der Teleskopstütze verdreht werden muß. Der Bolzenriegel liegt dabei an dem betreffenden Umfangsanschlag an und verhindert ein Mitdrehen der Absenkhülse beim Verdrehen der Stellmutter in Ausfahrrichtung. Nachteilig bei dieser Anordnung ist, daß durch ein Verdrehen der Stellmutter in entgegengesetzter Richtung die Absenkhülse mitgenommen werden kann, wodurch der Bolzenriegel von dem Ausfahr-Abstützbereich der Stützfläche abrutschen und in den Absenk-Abstützbereich hineinrutschen kann. Ein derartiges Rückwärtsdrehen der Stellmutter kann z.B. dann erforderlich sein, wenn die Stellmutter zunächst in Ausfahrrichtung etwas zu weit gedreht wurde und wieder um ein geringes Stück zurückgedreht werden muß. Das plötzliche und ungewollte Zurückschnellen des Bolzenriegels von dem Ausfahr-Abstützbereich in den Absenk-Abstützbereich bringt nicht nur eine Verletzungsgefahr für die Bedienungsperson mit sich, sondern erfordert auch ein erneutes Verdrehen der Absenkhülse so weit, daß der Bolzenriegel sich wieder auf dem Ausfahr-Abstützbereich der Absenkhülse befindet.

Das Ziel der Erfindung besteht darin, eine längenveränderliche Teleskopstütze der eingangs genannten Gattung zu schaffen, welche mit geringem baulichen Aufwand eine einwandfreie Drehsicherung der Absenkhülse in der Ausfahrposition gewährleistet.

Zur Lösung dieser Aufgabe sind die Merkmale des kennzeichnenden Teils des Anspruches 1 vorgesehen.

Der Erfindungsgedanke ist also darin zu sehen, daß die Absenkhülse in der Ausfahr-Drehposition in beiden Drehrichtungen drehgesichert ist, so daß die Stellmutter sowohl in Ausfahr- als auch in Absenkrichtung verdreht werden kann, ohne daß eine Gefahr besteht, daß die Relativposition zwischen Absenkhülse und Bolzenriegel sich verändert. Die Teleskopstütze kann somit in optimaler Weise auf die richtige Länge eingestellt werden, und es besteht keine Gefahr, daß sich die Stütze ungewollt absenkt und somit erneut justiert werden muß.

Obwohl grundsätzlich parallel zu dem bzw. den für den Bolzenriegel vorgesehenen Langlöchern weitere Langlöcher zur Aufnahme des bzw. der Drehriegel vorgesehen sein könnten, ist es doch bevorzugt, wenn diejenigen Langlöcher, die bereits den Bolzenriegel aufnehmen, darüber oder bevorzugt darunter auch den bzw. die Drehriegel aufnehmen. Ein und dieselben Langlöcher werden somit doppelt für die Aufnahme der Bolzenriegel und der Drehriegel ausgenutzt. Sie müssen lediglich um die Längserstreckung der Drehriegel etwas verlängert werden.

Im einfachsten Fall könnten die erfindungsgemäßen Drehriegel in der Ausfahrposition der Absenkhülse von außen her in das Langloch bzw. die Langlöcher radial eingeschoben werden. Soll dann später die Absenkhülse in die Absenkposition verdreht werden, so wird zuvor der Drehriegel aus dem Langloch entfernt, so daß die Absenkhülse wieder relativ zum Außenrohr bzw. zum Bolzenriegel verdreht werden kann. Auf diese Weise kann die Schnellabsenkbewegung problemlos ausgeführt werden.

Bei dieser einfachsten Ausführungsform eines erfindungsgemäßen Drehriegels könnte dieser beispielsweise durch eine Feder auf das Außenrohr zu vorgespannt in einer Radialbohrung der Absenkhülse vorgesehen sein. Der Drehriegel würde dann bei Ausrichtung mit dem Langloch selbsttätig in dieses einschnappen und könnte zwecks Verdrehung der Absenkhülse durch eine geeignete Handhabe aus dem Langloch wieder gegen die Federkraft herausgezogen werden.

Bevorzugt ist jedoch die Ausführungsform nach Anspruch 2, bei der der bzw. die Drehriegel ständig in Eingriff mit dem Langloch bleiben, wobei die Verdrehung der Absenkhülse um die Rohrachse durch eine geeignete drehbewegliche Lagerung des Drehriegels an der Absenkhülse ermöglicht wird. Durch Ausführung von Hammerschlägen in Umfangsrichtung auf die Absenkhülse kann die erforderliche Verklemmung der Drehriegel in der Ausfahrposition herbeigeführt werden, wobei die Verriegelung der Drehriegel im Langloch die Relativverschiebung von Absenkhülse und Drehriegel durch die in Umfangsrichtung ausgeführten Hammerschläge möglich macht.

Die Weiterbildung nach Anspruch 3 ist deswegen besonders vorteilhaft, weil hierdurch die gesamte erforderliche Absenkbewegung der Teleskopstütze zum Zwecke der Ausschalung durch Verdrehung der Absenkhülse herbeigeführt wird, welche eine Schraubenbahnstützfläche von entsprechend großer Steilheit aufweist. Auf diese Weise erübrigt sich nach der Schnellabsenkbewegung noch ein Rückdrehen der Stellmutter.

Besonders vorteilhaft ist die Aufteilung der Stützfläche in zwei sich jeweils nur über einen Bereich von etwa 180° erstreckende Schraubenbereiche.

Bei der vorteilhaften Ausgestaltung der Erfindung nach Anspruch 4 dient der Drehriegel nicht nur zur Drehverriegelung der Absenkhülse in der Ausfahrposition sondern gleichzeitig auch noch als mechanisches Zwischenglied zwischen dem Bolzenriegel bzw. den Bolzenriegeln und der schraubenförmigen Stützfläche der Absenkhülse. Die Auflagefläche des Lagerteils ist dabei vorteilhafterweise eben und senkrecht zur Rohrachse verlaufend ausgebildet, so daß der Bolzenriegel auf einer ebenen fläche aufliegt. Die mit der Stützfläche in Eingriff stehende Gleitfläche des Lagerteils ist dagegen etwas entsprechend der schraubenförmigen Stützfläche schräg ausgebildet und stellt die eigentliche Gleitfläche zwischen dem Bolzenriegel und der Absenkhülse dar. Diese Gleitfläche kann in Umfangsrichtung vergleichsweise lang ausgebildet sein und somit besonders günstige und wohldefinierte Gleiteigenschaften sicherstellen.

Das Ausführungsbeispiel nach Anspruch 4 gewährleistet weiter, daß selbst für den Fall, daß in der Ausfahrposition die Klemmung zwischen Drehriegel und Absenkhülse nicht ausreichen sollte, eine selbsttätige Verdrehung der Absenkhülse unter der Last des Innenrohres wirksam vermieden ist. Außerhalb der Ausfahr-Drehposition liegt jedoch keine Selbsthemmung mehr vor, so daß nach dem Lösen der Klemmung und Überwindung der Selbsthemmung beispielsweise durch in Umfangsrichtung ausgeführte Hammerschläge auf entsprechende Vorsprünge der Absenkhülse diese selbsttätig in die Absenkposition gelangt. Die Schraubenbahn sollte jedoch auch nicht so steil sein, daß es zu zu starken Beschleunigungen und Stößen beim Abrutschen des Lagerteils auf der Stützfläche der Absenkhülse kommt.

Durch die Ausbildung nach Anspruch 5 wird die Verklemmung des Drehriegels in der Ausfahrposition der Absenkhülse in besonders vorteilhafter Weise realisiert.

Vorteilhafte Maßangaben für die Neigungen der einzelnen Flächen sind den Ansprüchen 5 und 6 zu entnehmen.

Nach Anspruch 7 kann der Drehriegel U-förmig ausgebildet sein und entsprechende Vorsprünge und Flächen der Absenkhülse von innen umgeben. Gemäß Anspruch 7 kann aber der Drehriegel auch in einer nutförmigen Ausnehmung in der inneren Mantelfläche der Absenkhülse angeordnet sein.

Besonders vorteilhaft ist die Kombination des Bolzenriegels mit dem Drehriegel nach Anspruch 8. Hierdurch bedarf es keines Bolzenriegels mehr als separates und verlierbares Bauteil. Durch das Ausführungsbeispiel nach Anspruch 8 wird auch die Bewegung des Drehriegels auch in Richtung von der Stützfläche weg in axialer Richtung begrenzt, und zwar entlang seiner gesamten Umfangsbewegung.

Bei einer Integration von Bolzenriegel und Drehriegel besteht das Problem, die Bereiche der Absenkbewegung der Absenkhülse und des axialen Außer-Eingriff-Bringens der Bolzenriegel mit den Tragausnehmungen des Innenrohrs. Um diese Trennung besonders wirksam durchzuführen, ist die Weiterbildung nach Anspruch 9 vorgesehen. Hierdurch kann es nicht versehentlich zu einem Übergang bei der Drehbewegung der Absenkhülse vom Absenkbereich zum Freigabebereich kommen. Die Verdrehung der Absenkhülse in dem Anstiegsbereich erfordert nämlich im Gegensatz zum vorangehenden Absenkbereich die Aufbringung von Dreh- bzw. Hubkräften, wodurch die Bedienungsperson auf die bevorstehende Trennung der Bolzenriegel vom Innenrohr aufmerksam wird und das Innenrohr entlastet. Am einfachsten wird in diesem Bereich die Absenkhülse verdreht und gleichzeitig das Innenrohr angehoben, so daß die Bolzenriegel zwecks leichterer Trennung vom Innenrohr entlastet werden.

Die Anschlagstufe gemäß Anspruch 9 trägt ebenfalls dazu bei, daß kein unbewußter Übergang vom Absenkbereich in den Bolzenriegel-Freigabebereich erfolgt.

Anspruch 10 kennzeichnet eine vorteilhafte praktische Ausführungsform zum Außer-Eingriff-Bringen der Bolzenriegel mit dem Innenrohr.

Sofern es sich bei den Bolzenriegeln nicht um quer durch das gesamte Innenrohr hindurchverlaufende Bolzen handelt, sondern lediglich um am Drehriegel angeordnete Bolzenstummel brauchen im Innenrohr keine durchgehenden Querbohrungen angeordnet zu sein. Vielmehr genügen gemäß Anspruch 10 bereits entsprechende Riegel-Einsenkungen. Dadurch wird die Schwächung des Innenrohrs durch die Tragausnehmungen auf ein Minimum herabgesetzt. Auch das Eindringen von Feuchtigkeit ins Rohrinnere kann so vermieden werden. Die Erfindung wird im folgenden beispielsweise anhand der Zeichnung beschrieben ; in dieser zeigt :

Fig. 1      eine teilweise geschnittene schematische Seitenansicht einer erfindungsgemäßen Teleskopstütze, die zwischen einer Deckenschalung und einer Boden-Abstützfläche angeordnet ist,

Fig. 2      eine vergrößerte Ausschnittsansicht des Bereiches II in Fig. 1,

Fig. 3      eine radiale Innenansicht der Absenkhülse 15 nach den Fig. 1 und 2 in einer in die Zeichnungsebene der Fig. 3 abgewickelten Form,

Fig. 4      einen Schnitt nach Linie IV-IV in Fig. 3,

Fig. 5      eine zu Fig. 2 analoge Seitenansicht einer weiteren Ausführungsform der erfindungsgemäßen Teleskopstütze, wobei diese Ansicht jedoch gegenüber Fig. 2 um 90° um die Rohrachse 30 gedreht ist,

Fig. 6      eine entsprechende Ansicht wie Fig. 5, wobei jedoch die Drehriegel mit den darin integrierten Bolzenriegeln in der Außer-Eingriffs-Position dargestellt sind,

Fig. 7      eine radiale Innenansicht der Absenkhülse der Ausführungsform nach den Fig. 5 und 6 in in die Ebene der Fig. 7 abgewickelter Form, wobei die Drehriegel mit den darin integrierten Bolzenriegeln in vier verschiedenen Winkelpositionen VIIa, VIIb, VIIc bzw. VIId wiedergegeben sind, die

Fig. 7a, 7b, 7c, 7d      Schnitte nach den Linien VIIa-VIIa, VIIb-VIIb, VIIc-VIIc bzw. VIId-VIId in Fig. 7,

Fig. 8      eine Teil-Schnittansicht des Innenrohrs der erfindungsgemäßen Teleskopstütze mit zwei verschiedenen Ausführungsformen der Tragausnehmungen,

Fig. 9      einen Schnitt nach Linie IX-IX in Fig. 8 und

Fig. 10      einen Schnitt nach Linie X-X in Fig. 8.

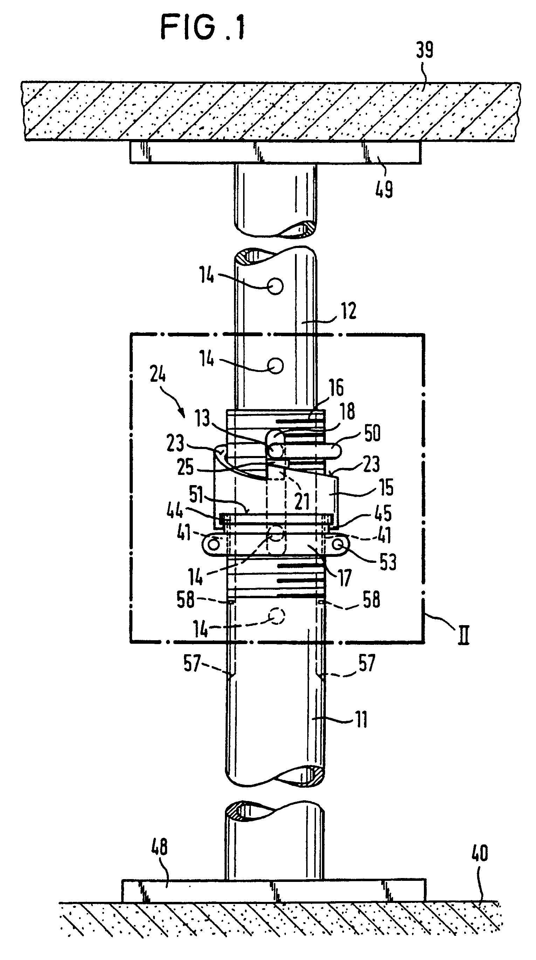

Nach Fig. 1 ist zwischen einer durch den Boden gebildeten ebenen Abstützfläche 40 und einer nur schematisch angedeuteten Deckenschalung 39 eine erfindungsgemäße Teleskopstütze 24 angeordnet, welche aus einem Außenrohr 11 mit einer Fußplatte 48 am unteren Ende und einem darin axial verschiebbaren Innenrohr 12 mit einer oben daran angeordneten Deckenplatte 49 besteht.

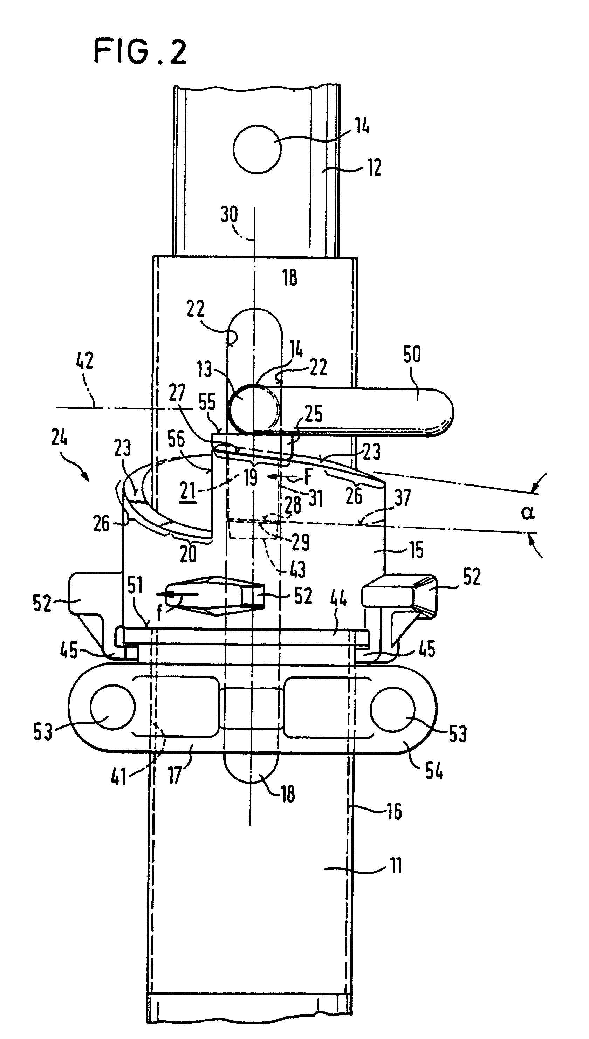

Nach den Fig. 1 und 2 ist das von oben in das Außenrohr 11 eingesteckte Innenrohr 12 dadurch am Außenrohr 11 abgestützt, daß durch zwei im oberen Bereich des Außenrohres 11 diametral gegenüberliegend angeordnete axiale Langlöcher 18 und eine damit radial ausgerichtete, als durchgehende Bohrung ausgebildete und quer zur Mittelachse 30 verlaufende Tragausnehmung 14 des Innenrohres 12 ein als durchgehender Bolzen mit einer Betätigungsabwinklung 50 ausgebildeter Bolzenriegel 13 quer zur Rohrachse 30 hindurchgesteckt ist.

Die aus den Langlöchern 18 herausragenden Bereiche der Bolzenriegel 13 stützen sich auf Lagerteilen 25 von Drehriegeln 21 ab, die ihrerseits auf sich um die Mittelachse 30 um 180° erstreckenden schraubenbahnförmigen Stutzflächen 23 einer das obere Ende des Außenrohres 11 umgebenden Absenkhülse 15 aufliegen. Die Absenkhülse 15 liegt ihrerseits bei 51 drehbar auf einer ein Innengewinde 41 aufweisenden Stellmutter 17 auf, die auf das mit einem Außengewinde 16 versehene obere Ende des Außenrohrs 11 aufgeschraubt ist. Wie sich aus Fig. 1 ergibt, sind das Außengewinde 16 und das Innengewinde 41 relativ flach ausgebildet, so daß durch Verdrehen der Stellmutter 17 in der einen oder anderen Richtung eine Fein-Höhenverstellung der Teleskopstütze 24 erfolgen kann.

Von diametral gegenüberliegenden Seiten am unteren Ende der Absenkhülse 15 umgreifen Axial-Halteanschläge 45 von unten einen Umfangsflansch 44 am oberen Ende der Stellmutter 17, so daß die Absenkhülse 15 und die Stellmutter 17 relativ um die Mittelachse 30 verdrehbar, in Axialrichtung jedoch im wesentlichen relativ zueinander unverschiebbar verbunden sind. Dadurch, daß die Axial-Halteanschläge 45 nur an diametral gegenüberliegenden Seiten der Absenkhülse 15 vorgesehen sind, kann die Absenkhülse 15 durch Aufschieben quer zur Mittelachse 30 problemlos mit der Stellmutter 17 axial in oder außer Ausrichtung gebracht werden, wenn beide Teile von den Rohren 11, 12 entfernt sind oder die Stellmutter 17 in eine solche Position gebracht wird, daß die fläche 51 über dem Gewindebereich 16 des Außenrohres 11 liegt.

Vom Umfang der Absenkhülse 15 stehen Radialbetätigungsvorsprunge 52 vor, über die mittels in Umfangsrichtung ausgeübte Hammerschläge geeignete Drehmomente auf die Absenkhülse 15 übertragen werden können. Für die Verdrehung der Stellmutter 17 sind in lappenartigen Vorsprüngen 54 Betätigungsbohrungen 53 vorgesehen, in die ein stabartiges Werkzeug zur Schaffung eines geeignet langen Hebelarms einführbar ist.

Erfindungsgemäß weist die Absenkhülse 15 an ihrem dem Bolzenriegel 13 zugewandten Stirnrand zwei diametral gegenüberliegende, sich jeweils über etwa 180° erstreckende schraubenförmig abfallende Stützflächen 23 auf, die am Anfang einen die am weitesten ausgefahrene Position des Innenrohres 12 gewährleistenden Ausfahr-Abstützbereich 19 und am Ende einen die am tiefsten abgesenkte Position des Innenrohrs 12 gewährleistenden Absenk-Abstützbereich 20 aufweisen, zwischen denen sich ein schraubenförmig stetig abfallender Bereich 26 befindet.

Das Lagerteil 25 des Drehriegels 21 weist eine ebene obere Fläche 55 sowie eine entsprechend der Neigung der Stützfläche 23 im Ausfahr-Abstützbereich 19 entsprechend geneigte untere Gleitfläche 27 auf, die mit der Stützfläche 23 in Gleiteingriff steht. Vom Lagerteil 25 erstreckt sich auf der Innenseite der Absenkhülse 15 ein Langloch-Eingriffsteil 31 axial in Richtung der Stellmutter 17. Das Langloch-Eingriffsteil 31 weist im wesentlichen die Breite des Langloches 18 auf und greift in dieses gleitend ein, so daß die seitlichen Ränder 22 des Langloches 18 eine Verschiebung des Drehriegels 21 in Richtung der Mittelachse 30, jedoch nicht in Umfangsrichtung der Hülse 25 gestatten.

Nach den Fig. 2 bis 4 schließt sich unten an das Langloch-Eingriffsteil 31 ein zur Absenkhülse 15 sich radial erstreckender Schenkel 43 an, der in der Position nach den Fig. 1 bis 4 mittels einer oberen Klemmfläche 29 mit einer unteren Gegenklemmfläche 28 der Absenkhülse 15 in Klemmeingriff steht.

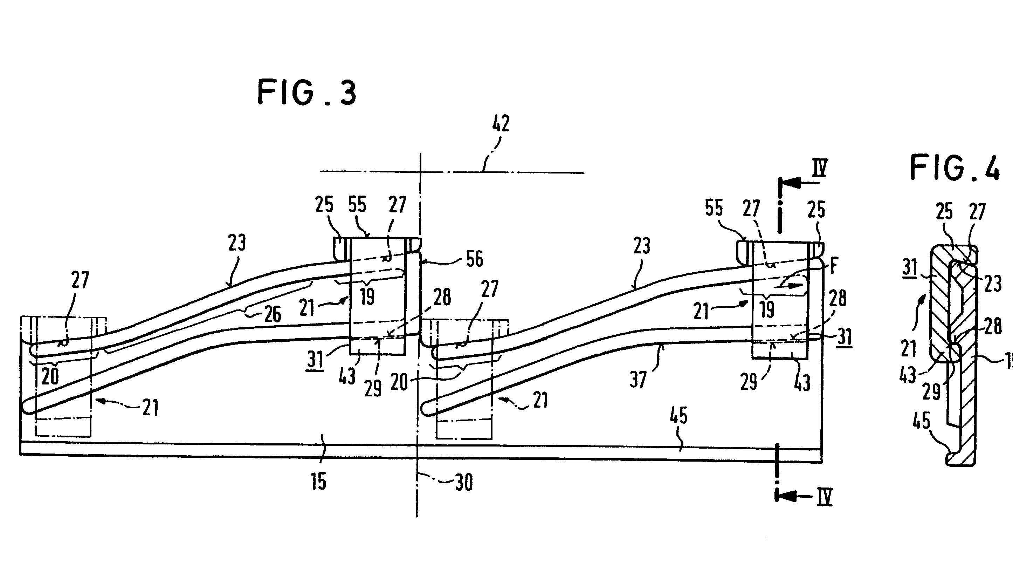

Nach Fig. 4 fällt die Gleitfläche 27 am unteren Ende des Lagerteils 25 ebenso wie die Gegen-Stützfläche 23 etwas radial nach außen ab, so daß bei Belastung des Lagerteils 25 durch den Bolzenriegel 13 der Drehriegel 21 radial nach außen gegen die Absenkhülse 15 gedrückt wird.

Erfindungsgemäß ist nach Fig. 2 der Winkel $\alpha$ zwischen dem Ausfahr-Abstützbereich 19 und der Gegenklemmfläche 28 so gewählt, daß in Zusammenwirkung mit den entsprechend keilförmig ausgebildeten Gleitflächen 27 und Klemmflächen 29 des Drehriegels 21 beim Beaufschlagen des Drehriegels 21 in Richtung des Pfeiles F in den Fig. 1 und 3 eine feste Verklemmung zwischen dem Drehriegel 21 und der Absenkhülse 15 erzielt wird. Der relative Keilwinkel zwischen den Flächen 23, 27 einerseits und den Flächen 28, 29 andererseits liegt bei etwa 4,5°.

Weiter ist es für die Funktion wichtig, daß der Winkel $\alpha$ gemäß Fig. 2 nicht wesentlich größer als etwa 7,5° ist, damit auch dann, wenn die durch die beschriebene Keilwirkung erzielte Verklemmung aufgehoben ist, noch eine Selbsthemmung zwischen dem Lagerteil 25 und der Stützfläche 23 in dem Sinne vorliegt, daß der Drehriegel 21 bei Belastung durch den Bolzenriegel 13 nicht selbsttätig entlang der Längsrichtung der Stützfläche 23 bewegt wird. Diese Bewegung muß vielmehr aus der Position nach den Fig. 1 bis 4 heraus dadurch eingeleitet werden, daß auf die radialen Vorsprunge 52 Hammerschläge im Sinne einer Lösung der Keilverbindung ausgeübt werden (Pfeil f in Fig. 2).

In Umfangsrichtung an den Ausfahr-Abstützbereich 19 schließt sich mit geringem Abstand ein vergleichsweise stark abfallender schraubenförmiger Bereich 26 (Fig. 2, 3) an, dessen Steigung so bemessen ist, daß hier zwischen dem Lagerteil 25 und der Stützfläche 23 keine Selbsthemmung mehr vorliegt. Hat also das Lagerteil 25 einmal den Bereich 26 erreicht, so wird die Absenkhülse 15 aufgrund der Gewichtskraft weiter verdreht, die das Innenrohr 12 über den Bolzenriegel 13 auf das Lagerteil 25 ausübt. Dabei gelangt der Drehriegel 21 mit dem Lagerteil 25 bis in den in Fig. 2 und 3 gezeigten Absenk-Abstützbereich 20, wo das Lagerteil 25 gegen die axial verlaufende Stufe 56 anschlägt, die zwischen dem Ende der einen und dem Beginn der anderen Stützfläche 23 vorliegt.

An die Gegenklemmfläche 28 schließt in Umfangsrichtung nach den Fig. 2 und 3 eine Begrenzungsfläche 37 an, die von dem Schenkel 43 mit Abstand untergriffen wird, so daß die Begrenzungsfläche 37 lediglich eine Sicherungsfunktion in dem Sinne ausübt, daß der Drehriegel 21 sich nur in begrenztem Maße von der Stützfläche 23 axial entfernen kann. In Eingriff steht der Schenkel 43 lediglich mit der Gegenklemmfläche 28 in der Ausfahrposition des Drehriegels 21.

Die Funktion der beschriebenen Teleskopstütze ist wie folgt :

Zunächst wird die Stellmutter 17 zusammen mit der darauf aufgesetzten Absenkhülse 15 auf das Gewinde 16 des Außenrohres 11 so weit aufgeschraubt, bis sich ein wesentlicher Bereich der Langlöcher 18 oberhalb der Stutzflächen 23 der Absenkhülse 15 befindet. Nunmehr werden von oben die Drehriegel 21 in die Langlöcher 18 eingeführt und in die Position nach den Fig. 2 und 3 gebracht. Wird jetzt das Innenrohr 12 in das Außenrohr 11 eingesteckt, so sind die Drehriegel 21 in ihrer Position an der Absenkhülse 15 sowie innerhalb der Langlöcher 18 gesichert. Das untere Ende des Innenrohrs 12 sollte dann gemäß Fig. 1 mit nach außen gerichteten Vorsprüngen 57 versehen werden, welche ein vollständiges Herausziehen des Innenrohres 12 aus dem Außenrohr 11 verhindern. Die Gegenvorsprünge 58 innen am Außenrohr sollten sich etwa im Bereich des unteren Endes des Außengewindes 16 befinden, so daß in jedem Fall eine ausreichende Überlappung von Innen- und Außenrohr gewährleistet ist und somit die Drehriegel 21 in jeder Auszugsposition des Innenrohrs gegen Herausfallen nach innen gesichert sind.

Nachdem die Fußplatte 48 und die Deckenplatte 49 vorher oder nachher angebracht sind, ist die Teleskopstütze funktionsfähig.

Der axiale Abstand der Tragausnehmungen 14 sollte etwas geringer als die Länge der Langlöcher 18 sein, um eine stufenlose freie Grob- und Feinjustierung der Länge der Teleskopstütze 24 zu ermöglichen.

Nunmehr ist die Teleskopstütze zum Einsatz bereit.

Soll eine vorbestimmte genaue Länge der Teleskopstütze 24 eingestellt werden, so wird zunächst die Stellmutter 17 in die unterste Position auf dem Außengewinde 16 verdreht, so daß der größte Teil der Langlöcher 18 oberhalb der Absenkhülse 15 freiliegt.

Nunmehr wird das Innenrohr 12 so weit aus dem Außenrohr 11 herausgezogen, daß die erforderliche

5

Länge grob eingestellt ist. Durch die mit dem oberen Teil der Langlöcher 18 ausgerichtete Tragausnehmung 14 wird nunmehr der Bolzenriegel 13 quer zur Mittelachse 30 hindurchgesteckt. Zuvor ist jedoch die Absenkhülse 15 in die aus Fig. 2 ersichtliche Ausfahrposition gebracht worden, indem die Absenkhülse 15 zunächst so weit verdreht worden ist, bis die Klemmung zwischen den Drehriegeln 21 und der Absenkhülse 15 im Bereich des Ausfahr-Abstützbereiches 19 wirksam zu werden beginnt. Alsdann wird die endgültige Verklemmung und Positionierung gemäß Fig. 2 durch Hammerschläge auf einen der Vorsprünge 52 entgegen dem Pfeil f herbeigeführt.

Nach dem Einstecken des Bolzenriegels 13 setzt sich dieser auf dem Lagerteil 25 ab, wodurch zunächst die Grobeinstellung der Länge der Teleskopstütze 24 erfolgt ist.

Die Verklemmung des Drehriegels 21 ist auch erst nach dem Einstecken des Bolzenriegels 13 möglich.

Anschließend wird dann die Stellmutter 17 in Ausfahrrichtung gedreht bis die Teleskopstütze 24 die richtige Länge hat. Wird zunächst versehentlich die Stellmutter 17 zu weit gedreht, so kann sie problemlos auch wieder zurückgedreht werden, ohne daß die Gefahr einer Entriegelung zwischen der Absenkhülse 15 und dem Außenrohr 11 besteht.

Nach Einstellung der richtigen Länge der Teleskopstütze 14 kann dann die Schalung 39 in dem vorgesehenen Abstand von der Abstützfläche 40 (Fig. 1) angeordnet werden und die Betonierung erfolgen.

Nachdem der Beton abgebunden hat und die Ausschalung vorgenommen werden soll, braucht jetzt lediglich in Richtung des Pfeiles f gemäß Fig. 2 durch Hammerschläge die Verklemmung zwischen den Drehriegeln 21 und der Absenkhülse 15 gelöst werden. Dadurch gelangen die Bereiche 26 der Stützfläche 23 in den Bereich des Lagerteils 25 der Drehriegel 21, worauf dann aufgrund des Gewichtes des Innenrohres 12 die Absenkhülse 15 selbsttätig weitergedreht wird, bis sich das Lagerteil 25 im Absenk-Abstützbereich 20 befindet. Dadurch wird das Innenrohr 11 schnell und problemlos um denjenigen Betrag von z.B. 3 cm abgesenkt, der für das Entfernen der Teleskopstütze 24 von der Deckenschalung 39 erforderlich ist. Eines Herunterschraubens der Stellmutter 17 auf dem Außengewinde 16 bedarf es zu diesem Zweck also nicht. Allerdings kann nach erfolgter Schnellabsenkung die Stellmutter 17 noch zurückgedreht werden, was ohne den Druck der Deckenschalung ohne größeren Kraftaufwand möglich ist.

Es versteht sich, daß die Schraubenbahn der Stützfläche 23 wesentlich steiler als das Außengewinde 16 ausgebildet ist. Während letzteres nämlich auf jeden Fall deutlich unterhalb des Bereiches der Selbsthemmung geneigt ist, kommt es bei der Schraubenbahn der Stützfläche 23 darauf an, daß innerhalb des größten Teils des Umfanges keine Selbsthemmung vorliegt.

Bei den folgenden Ausführungsbeispielen bezeichnen gleiche Bezugszahlen baulich und funktionell entsprechende Teile wie bei der Ausführungsform nach den Fig. 1 bis 4.

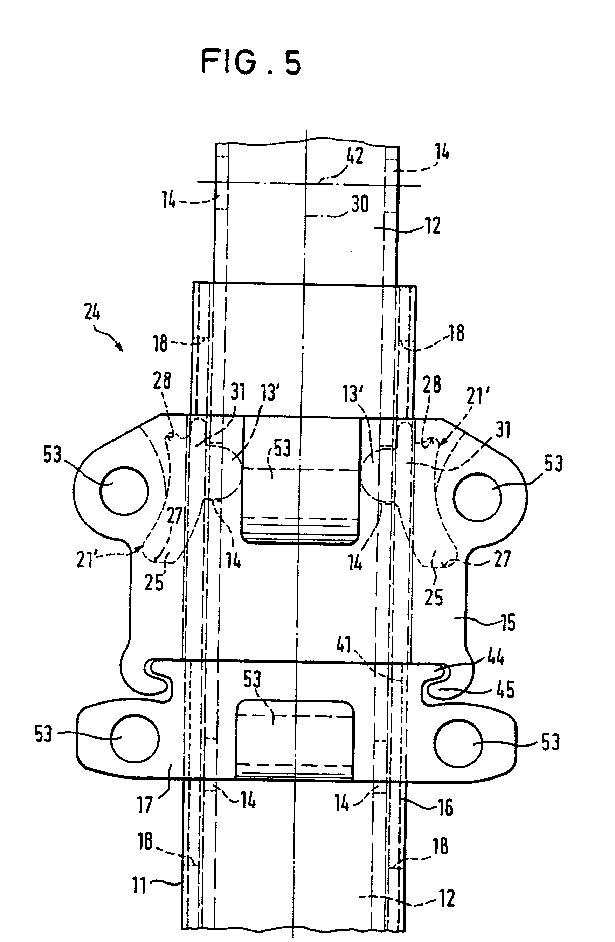

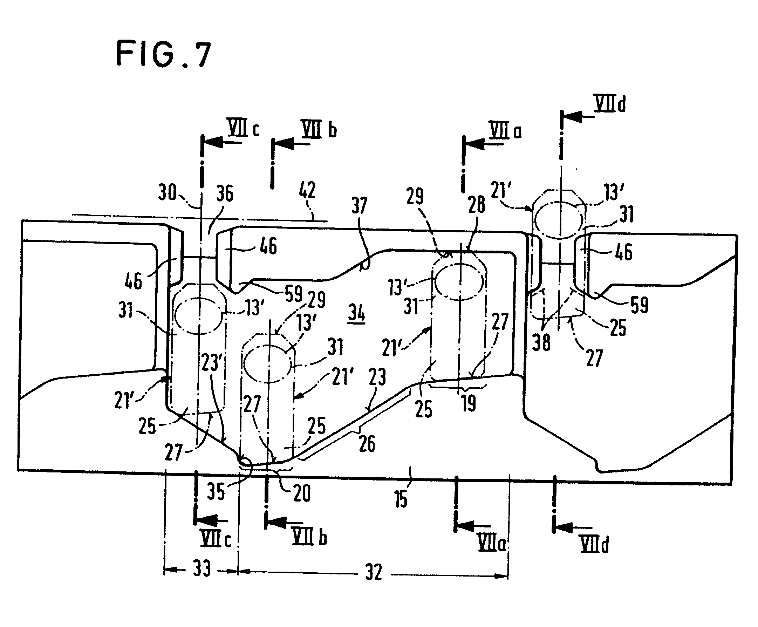

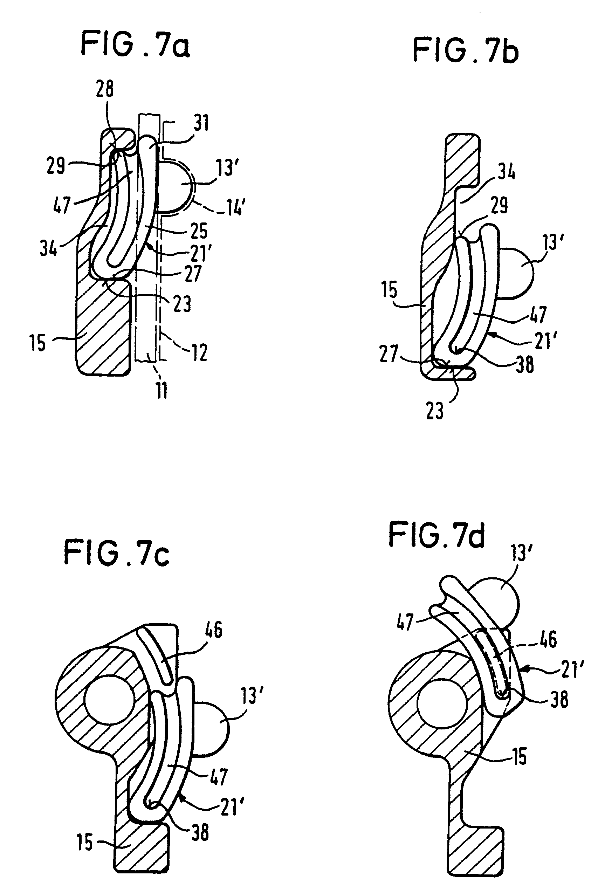

Beim Ausführungsbeispiel nach den Fig. 5 bis 7d ist in jeden der beiden diametral gegenüberliegenden Drehriegel 21' ein stummelartiger und radial nach innen vorstehender Bolzenriegel 13' mit vorzugsweise abgerundetem Kopf integriert. Außerdem sind die Drehriegel 21' als Gleitschuhe ausgebildet, die gemäß Fig. 7 innerhalb einer Innennut 34 der Abdeckhülse 15 in analoger Weise beweglich wie die Drehriegel 21 nach den Fig. 1 bis 4 angeordnet sind. Aufgrund der baulichen Vereinigung der Drehriegel 21' mit den Bolzenriegeln 13' muß jedoch zusätzlich zu dem Ausführungsbeispiel nach den Fig. 1 bis 4 dafür Sorge getragen werden, daß die Bolzenriegel 13' auch außer Eingriff mit den Tragausnehmungen 14, 14' gebracht werden können. Dies geschieht im einzelnen in der folgenden, anhand der Fig. 5 bis 7d beschriebenen Weise :

Die Drehriegel 21' sind nach den Fig. 5 und 6 sowie 7a bis 7d im wesentlichen kreisausschnittsförmig geformt, wobei die Kreisausschnitte die Außenwand des Innenrohres 12 im wesentlichen axial tangieren und ihre Krümmungsmittelachse sowie ihr Krümmungsradius außerhalb des Innenrohres 12 liegen.

Die Umfangsnut 34 erstreckt sich über einen etwas kleineren Winkel als 180° entlang eines Absenkwinkelbereiches 32 (Fig. 7) und geht dann in einen Freigabewinkelbereich 33 über.

Innerhalb des Absenkwinkelbereiches 32 befinden sich die Drehriegel 21' gemäß Fig. 7, 7a zunächst im Ausfahr-Abstützbereich 19, wo sie zwischen der Stützfläche 23 und der Gegenklemmfläche 28 so eingeklemmt sind, daß hier eine relativ feste Verbindung zwischen den Drehriegeln 21' und der Absenkhülse 15 in Umfangsrichtung vorliegt. In axialer Richtung nehmen die Drehriegel 21' hierbei die aus Fig. 5 und 7a ersichtliche Position (VIIa in Fig. 7) ein, in welcher sich die Bolzenriegel 13' in Eingriff mit den Tragausnehmungen 14 bzw. 14' des Innenrohres 12 befinden.

Zum Zwecke der Schnellabsenkung wird dann die Absenkhülse 15 wieder durch Hammerschläge in Umfangsrichtung so bewegt, daß die Drehriegel 21' gemäß Fig. 7 den nicht selbsthemmenden Bereich 26 der schraubenbahnförmigen Stützfläche 23 erreichen, worauf die Absenkhülse 15 sich unter dem Gewicht des Innenrohres 12 selbsttätig weiterdreht, bis schließlich die Drehriegel 21' sich in der tiefsten Position (VIIb in Fig. 7, d.h. im Einfahrabstützbereich) 20 auf der Stützfläche 23 befinden, die auch in Fig. 7b wiedergegeben ist. Dort begrenzt zunächst ein Anschlag 35 (Fig. 7) eine weitere Verdrehung der Absenkhülse 15. Oberhalb der Drehriegel 21' befindet sich jedoch in dieser Absenkposition ein ausreichender Freiraum für eine Bewegung der Drehriegel 21' nach oben.

An die Anschlagstufe 35 schließt sich in Umfangsrichtung innerhalb des Freigabewinkelbereiches 33 ein relativ stark ansteigender Bereich 23' der Stützfläche 23 an. Auf diesen Bereich können die Drehriegel 21' nur dadurch gelangen, daß das Innenrohr 12 oberhalb des Außenrohres 11 ergriffen und unter Verdrehung der Absenkhülse 15 etwas angehoben wird. Durch weiteres Heben und Drehen gelangen schließlich die Drehriegel 21' gemäß Fig. 7 und 7c in axiale Ausrichtung (Position VIIc in Fig. 7) mit oberhalb des Anstiegsbereiches 23' vorgesehenen, nach außen weggebogenen Schlitzen 36, die seitlich durch Federn 46 begrenzt sind, welche mit seitlichen und entsprechend den Drehriegeln 21' gekrümmten Nuten 47 in den Seitenflächen der Drehriegel 21' zusammenwirken können, wenn die Drehriegel 21' aus der Position nach Fig. 7c in die nach Fig. 7d angehoben werden.

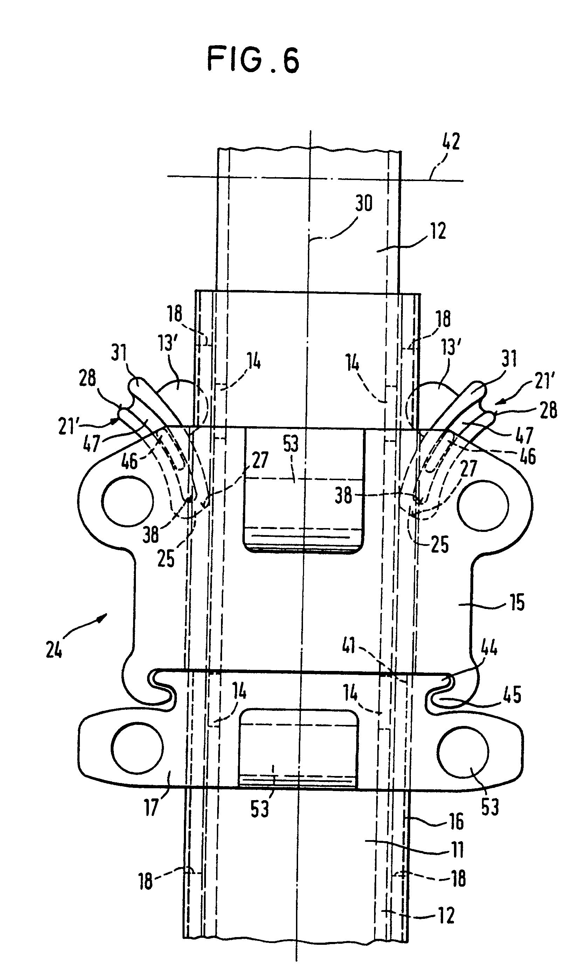

Durch Anheben des Innenrohres 12 bei mit den Schlitzen 36 ausgerichteten Drehriegeln (Fig. 7c) gleiten die entsprechend ihrer Krümmung gekrümmt geführten Drehriegel 21' schließlich in die aus Fig. 6 und 7d ersichtliche Position (VIId in Fig. 7), in welcher sich die Bolzenriegel 13' außer Eingriff mit den Tragausnehmungen 14 bzw. 14' des Innenrohres 12 befinden. Nunmehr kann das Innenrohr 12 so weit ausgezogen werden, bis die nächste Tragausnehmung 14 bzw. 14' mit dem Bolzenriegel 13' in Ausrichtung gelangt, wodurch die Bolzenriegel 13' wieder selbsttätig in die Tragausnehmungen 14 einfallen.

Soll eine darüber befindliche Tragausnehmung 14 mit den Bolzenriegeln 13' in Eingriff gebracht werden, so wird das Innenrohr 12 aus der Position nach Fig. 6 oder 7d zunächst etwas verdreht, so daß die Tragausnehmungen 14 axial nicht mehr mit den Bolzenriegeln 13' ausgerichtet sind. Nunmehr kann das Tragrohr 12 abgesenkt werden, ohne daß die Gefahr besteht, daß die Bolzenriegel 13' in die abgesenkten Tragausnehmungen 14 einfallen. Erst wenn das Innenrohr 12 wieder zurückgedreht wird und die Tragausnehmungen 14 radial in Ausrichtung mit den Bolzenriegeln 13' gebracht werden, kann nunmehr selbsttätig aufgrund der auf die Drehriegel 21' wirkenden Gewichtskraft das Einfallen der Bolzenriegel 13' in die Tragausnehmungen 14 erfolgen.

Um ein Herausfallen der Drehriegel 21' aus den durch die Federn 46 gebildeten Bogenführungen zu vermeiden, sind die seitlichen Führungsnuten 47 unten durch Endanschläge 38 begrenzt, welche schließlich an die Federn 46 anschlagen, wenn die Drehriegel 21' in der Position nach Fig. 6 und 7d sind. Die Drehriegel 21' sind somit unverlierbar an der Absenkhülse 15 gehalten, sofern das Innenrohr 12 im Außenrohr 11 steckt, was normalerweise der Fall ist.

Mit 42 ist in den Figuren die senkrecht auf der Mittelachse 30 stehende Richtung bezeichnet, in welcher die Relativbewegung zwischen der Abdeckhülse 15 und den Drehriegeln 21' stattfindet.

Von Bedeutung ist auch noch der von der Begrenzungsfläche 37 im Bereich der Federn 46 etwas zur Nut 34 hin vorstehende Vorsprung 59, welcher beim axialen Anheben des Innenrohrs 12 aus der Position, wo sich die Drehriegel 21' auf dem Absenk-Abstützbereich 20 befinden, verhindert, daß im Anschluß an das Anschlagen der Drehriegel 21' an die Begrenzungsfläche 37 von allein eine Drehung und ein Hineingleiten der Drehriegel 21' in die Schlitze 36 erfolgt. Dies soll nur bei einer bewußten kombinierten Dreh-Hubbewegung von der Position VIIb in die Position VIIc in Fig. 7 möglich sein.

Die am weitesten rechts in Fig. 7 und Fig. 7d gezeigte Anordnung des Drehriegels 21' zeigt diejenige am weitesten axial verschobene Position, wo gerade die Anschlage 38 mit den unteren Enden der Federn 46 in Eingriff kommen.

Während beim Anheben des Drehriegels 21' aus der an zweiter Stelle in Fig. 7 gezeigten Position VIIb ebenso wie bei einer Bewegung zwischen den Bereichen 19 und 20 die radiale Anordnung der Drehriegel 21' und Bolzenriegel 13' der Position nach Fig. 5 entspricht (siehe auch Fig. 7a bis 7c), erfolgt beim Hochlaufen der Drehriegel 21' am Anstiegsbereich 23' das bogenförmige Auswärtsschwenken der Drehriegel 21' aus der Position nach Fig. 5 bzw. 7c in die Position nach Fig. 6 bzw. 7d. Die Drehriegel 21' und Bolzenriegel 13' ändern also innerhalb der Bereiche 19, 20, 26 lediglich ihre Axialposition, beim Übergang von der Position nach Fig. 7c in die nach Fig. 7d zusätzlich auch noch ihre Radialposition in dem Sinne, daß die Bolzenriegel 13' außer Eingriff mit den Tragausnehmungen 14 bzw. 14' kommen.

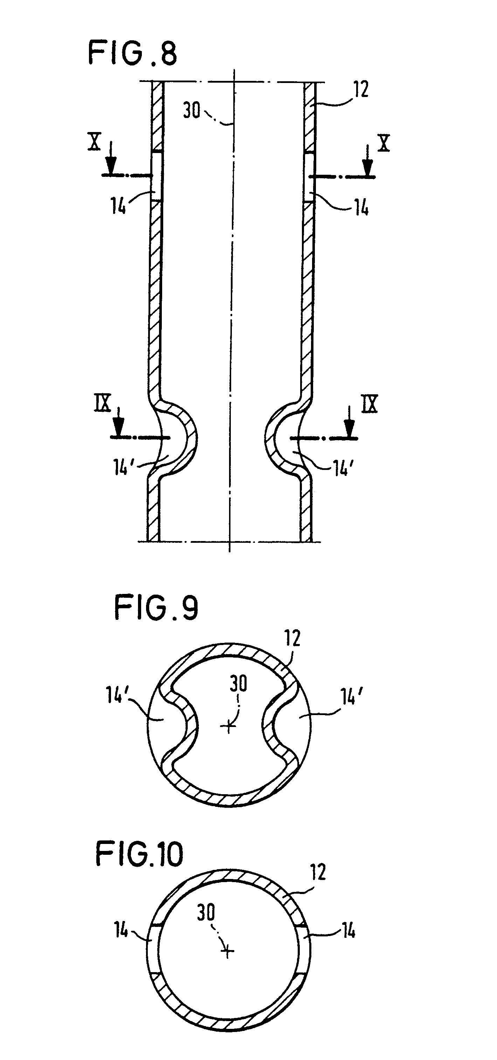

Die Fig. 8 und 10 zeigen bei 14 Tragausnehmungen in Form durchgehender Bohrungen, wie sie bei Verwendung eines als langer Bolzen ausgebildeten Bolzenriegels 13 nach den Fig. 1 bis 4 erforderlich sind.

Werden jedoch nur Bolzenriegel 13' in Form von Bolzenstummeln nach den Fig. 5 bis 7 verwendet, so genügt es, wenn die Tragausnehmungen die Form von Einsenkungen 14' gemäß den Fig. 8 und 9 aufweisen.

**Patentansprüche**

1. Längenveränderliche, auf Druck beanspruchbare Teleskopstütze (24), insbesondere zur bezüglich des Abstandes definierten Abstützung von Schalungen (39) relativ zu einer festen Abstützfläche (40), mit einem Außenrohr (11) und einem teleskopisch darin verschiebbaren Innenrohr (12), welches in seiner Mantelfläche wenigstens eine und bevorzugt mehrere über seine Länge verteilte, insbesondere den gleichen Abstand aufweisende Tragausnehmungen (14) aufweist, in die wenigstens ein sich über eine Stützfläche (23) an einer das dem Innenrohr (12) zugewandte Ende des Außenrohres (11) gleitend umgebenden Absenkhülse (15) und eine auf einem an diesem Ende des Außenrohres (11) vorgesehenen Außengewinde (16) angeordnete, ein Innengewinde (41) aufweisende Stellmutter (17) am Außenrohr (11) abstützender Bolzenriegel (13, 13') durch wenigstens ein und vorzugsweise zwei diametral gegenüberliegende, im Gewindeende des Außenrohres (11) vorgesehene axiale Langlöcher (18) hindurch lösbar eingreift, wobei die Stützfläche (23) der Absenkhülse (15) für den Bolzenriegel (13, 13') aus wenigstens zwei in Umfangsrichtung und axial beabstandeten Abstützbereichen (19, 20), und zwar einem Ausfahr-Abstützbereich (19) sowie einem Absenk-Abstützbereich (20), besteht, die durch geeignete Verdrehung der Absenkhülse (15) relativ zum Außenrohr (11) wahlweise die Abstutzung des Bolzenriegels (13, 13') in der ausgefahrenen bzw. abgesenkten Position übernehmen können, und wobei die Absenkhülse (15) in der Aus fahrposition, wo das Innenrohr (12) am weitesten ausgefahren ist, in der Drehrichtung, in der die Stellmutter (17) zum weiteren Ausfahren des Innenrohres (12) verdreht werden müßte, relativ zum Außenrohr (11) drehverriegelt ist, dadurch **gekennzeichnet,** daß die Absenkhülse (15) in der Ausfahrposition durch wenigstens einen und vorzugsweise zwei in ein im Gewindebereich des Außenrohres (11) vorgesehenes axial verlaufendes Langloch (18) bzw. mehrere über den Umfang verteilt angeordnete derartige Langlöcher (18) eingreifende, sich an deren axial verlaufenden Rändern (22) in Umfangsrichtung abstützende Drehriegel (21, 21') gegen Drehung in beiden Drehrichtungen verriegelbar ist, wobei das Langloch bzw. die Langlöcher vorzugsweise die bereits für die Bolzenriegel (13, 13') vorgesehenen Langlöcher (18) sind und die Drehriegel (21, 21') bevorzugt axial unmittelbar benachbart den zugeordneten Bolzenriegeln (13, 13') in den Langlöchern (18) angeordnet sind.

2. Teleskopstütze nach Anspruch 1, dadurch **gekennzeichnet,** daß der bzw. die Drehriegel (21, 21') relativ zur Absenkhülse (15) im wesentlichen in deren Umfangsrichtung beweglich an dieser angeordnet, jedoch in der Ausfahrposition der Absenkhülse (15) mit dieser in lösbarer Weise fest verbindbar sind, wobei insbesondere der bzw. die Drehriegel (21, 21') durch im wesentlichen in Umfangsrichtung erfolgendes Verschieben in den Ausfahr-Abstützbereich (19) mit der Absenkhülse (15) verklemmbar sind.

3. Teleskopstütze nach Anspruch 2, dadurch **gekennzeichnet,** daß für die Abstützung des Bolzenriegels (13) bzw. der Bolzenriegel (13') an der Absenkhülse (15) eine schraubenförmige Stützfläche (23), die konzentrisch zur Mittelachse (30) der Rohre (11, 12) verläuft, von solcher Steilheit vorgesehen ist, daß beim Verdrehen der Absenkhülse (15) von der Ausfahrposition in die Absenkposition das Innenrohr (12) relativ zum Außenrohr (11) in axialer Richtung die volle, für das Freigeben der Teleskopstütze (24) erforderliche Absenkbewegung durchführt, welche vorzugsweise ein Ausmaß von 2 bis 5 cm, insbesondere 2,5 bis 4 cm und in besonders vorteilhafter Weise etwa 3 cm hat, wobei insbesondere der Gewindeteil des Außenrohres (11) diametral gegenüberliegend zwei parallele Langlöcher (18) aufweist, in die jeweils ein an der Absenkhülse (15) abgestützter Bolzenriegel (13, 13') eingreift und daß in Umfangsrichtung hintereinander zwei gleiche, sich jeweils über im wesentlichen 180° erstreckende, als Schraubenbahnen ausgebildete Stutzflächen (23) an der Absenkhülse (15) vorgesehen sind.

4. Teleskopstütze nach einem der vorhergehenden Ansprüche, dadurch **gekennzeichnet,** daß der Drehriegel (21, 21') einen Lagerteil (25) aufweist, der auf der Stützfläche (23) der Absenkhülse (15) aufliegt und der zwischen dem Bolzenriegel (13, 13') und der Stützfläche (23) angeordnet ist, so daß sich der Bolzenriegel (13, 13') über das Lagerteil (25) auf der Stützfläche (23) abstützt, und das Lagerteil (25) mit einer Gleitfläche (27) auf der Stützfläche (23) in Umfangsrichtung gleiten kann, und/oder daß der Bolzenriegel (13, 13') sich in der Ausfahrposition selbsthemmend ggfs. über das Lagerteil (25) auf der Stützfläche (23) abstützt, wobei vorzugsweise die als Schraubenbahn ausgebildete Stützfläche (23) in Umfangsrichtung im Anschluß an den Ausfahr-Abstützbereich (19) in einen steiler abfallenden, nicht mehr selbsthemmenden Bereich (26) übergeht.

5. Teleskopstütze nach Anspruch 4, dadurch **gekennzeichnet,** daß der Drehriegel (21, 21') außer der die Stützfläche (23) der Absenkhülse (15) beaufschlagenden Gleitfläche (27) des Lagerteils (25) eine im Bereich des Ausfahr-Abstützbereiches (19) in umgekehrter axialer Richtung eine Gegenklemmfläche (28) der Absenkhülse (15) beaufschlagende Klemmfläche (29) aufweist, wobei bevorzugt die Stützfläche (23) und die Gegenklemmfläche (28) der Absenkhülse (15) an dem Ausfahr-Abstützbereich (19) relativ zueinander einen in Richtung des Abfalls der Schraubenbahn leicht zusammenlaufenden Keilwinkel ($\alpha$) aufweisen, der vorzugsweise 2 bis 6°, insbesondere 3 bis 5° und besonders vorteilhafterweise etwa 40 beträgt.

6. Teleskopstütze nach Anspruch 4 oder 5, dadurch **gekennzeichnet,** daß die Neigung der als Schraubenbahn ausgebildeten Stützfläche (23) der Absenkhülse (15) relativ zur Senkrechten (42) auf der Mittelachse (30) in Umfangsrichtung im Bereich des Ausfahr-Abstützbereiches (19) 5 bis 10°, insbesondere 7 bis 8° und besonders bevorzugt etwa 7,5° beträgt und/oder daß die Neigung der Klemmfläche (29) und der Gegenklemmfläche (28) relativ zur Senkrechten (42) auf der Mittelachse (30) in Umfangsrichtung im Bereich des Ausfahr-Abstützbereiches (19) 1 bis 5°, vorzugsweise 2 bis 4° und besonders vorteilhafterweise 2,5 bis 3,5° beträgt.

7. Teleskopstütze nach einem der vorhergehenden Ansprüche, dadurch gekennzeichnet, daß der Drehriegel (21) einen U-förmigen Querschnitt aufweist, dessen einer Schenkel das Lagerteil (25), dessen Steg das Langlocheingriffsteil (31) und dessen anderer Schenkel (43) die Klemmfläche (29) bildet oder daß der Drehriegel (21') als Gleitschuh ausgebildet ist, der in einer in der Innenfläche der Absenkhülse (15) ausgebildeten Nut (34) angeordnet ist, deren untere Berandung die Stützfläche (23) und deren obere Berandung die Gegenklemmfläche (28) und vorzugsweise auch eine in Umfangsrichtung anschließende Begrenzungsfläche (37) bildet, die die Bewegung des Drehriegels (21') in axialer Richtung von der Stützfläche (23) weg begrenzt.

8. Teleskopstütze nach einem der Ansprüche 2 bis 7, dadurch gekennzeichnet, daß der Bolzenriegel (13, 13') einen Bestandteil des Drehriegels (21, 21') bildet, der von dem Drehriegel (21, 21') radial nach innen in die zugeordnete Ausnehmung (14) des Innenrohres (12) eingreift und aus dieser Position zurückziehbar ist, wobei insbesondere der Bolzenriegel (13, 13') und der Drehriegel (21, 21') fest und vorzugsweise einstückig miteinander verbunden sind und der Drehriegel (21, 21') zumindest so weit von dem Innenrohr (12) wegbewegbar ist, daß der Bolzenriegel (13, 13') mit dem Innenrohr (12) außer Eingriff kommt, und daß zweckmäßigerweise die Bewegung des Drehriegels (21, 21') von der Stützfläche (23) weg durch eine allgemein entsprechend der Stützfläche (23) verlaufende Begrenfzungsfläche (37) begrenzt ist, die vorzugsweise in die Gegenklemmfläche (28) stetig übergeht.

9. Teleskopstütze nach Anspruch 8, dadurch gekennzeichnet, daß sich in Umfangsrichtung an den Absenkwinkelbereich (32), der einen Winkelumfang von 140° bis 160° und insbesondere etwa 150° haben sollte, ein Freigabewinkelbereich (33) von vorzugsweise 20 bis 40°, insbesondere etwa 30° anschließt, innerhalb dessen die Begrenzungsfläche (37) unterbrochen ist, derart, daß der Drehriegel (21, 21') so weit in Richtung der Ausziehbewegung des Innenrohres (12) verschiebbar ist, daß der Bolzenriegel (13, 13') mit der zugeordneten Ausnehmung (14) außer Eingriff kommt, wobei vorzugsweise die Stützfläche (23) im Anschluß an den Absenkbereich (32) innerhalb des Freigabewinkelbereiches (33) in einen vergleichsweise kurzen Anstiegsbereich übergeht, innerhalb dessen der Drehriegel (21, 21') nach oben und gleichzeitig der Bolzenriegel (13, 13') radial nach außen verschoben wird und insbesondere am Ende des Absenkbereiches (32) bzw. dem Beginn des Anstiegsbereiches (33) eine Anschlagstufe (35) in der Stützfläche (23) vorgesehen ist.

10. Teleskopstütze nach einem der Ansprüche 7 bis 9, dadurch gekennzeichnet, daß der Drehriegel (21, 21'), welcher vorzugsweise nach außen abgebogen ist, mit einer beträchtlichen axialen und radialen Komponente derart bogenförmig geführt ist, daß der Bolzenriegel (13, 13') in der einen Endposition mit einer zugeordneten Ausnehmung (14) in Eingriff steht und in einer weiteren, von der vorgenannten Endposition einen deutlichen axialen Abstand aufweisenden weiteren Löseposition außer Eingriff mit dem Innenrohr (12) ist, wobei bevorzugt die Bewegungsbahn der Drehriegel (21, 21') in der im wesentlichen axialen Richtung durch Anschläge (38) begrenzt ist, und/oder daß die Ausnehmungen im Innenrohr (12) lediglich Einsenkungen (14') sind.

## Claims

1. A telescopic support (24) of adjustable length and which can be loaded in compression, in particular for supporting shuttering (39) at a defined distance from a fixed support surface (40), the telescopic support comprising an outer tube (11) and an inner tube (12) which is telescopically displaceable therein and which has in its side surface at least one carrier recess and preferably several recesses (14) which are distributed over its length, and which in particular have the same spacing, wherein at least one latch bolt (13, 13') releasably engages via at least one and preferably two diametrically oppositely disposed axial elongate slots (18) provided in the threaded end of the outer tube (11) into at least one of the carrier recesses, with the latch bolt (13, 13') being supported on the outer tube (11) via a support surface (23) on a lowering sleeve (15) which slidingly surrounds the end of the outer tube (11) facing the inner tube (12) and via a positioning nut (17) having an inner thread (41) which is arranged on an outer thread (16) provided at this end of the outer tube (11) ; wherein the support surface (23) of the lowering sleeve (15) for the latch bolt (13, 13') comprises at least two support regions (19, 20) which are spaced apart in the circumferential direction and axially, and indeed at least one extended support region (19) and also one lowered support region (20), which through suitable rotation of the lowering sleeve (15) relative to the outer tube (11) can selectively take on the support of the latch bolt (13, 13') in the extended and lowered positions respectively, and wherein the lowering sleeve (15) in the extended position where the inner tube (12) is extended as far as possible, is rotationally locked relative to the outer tube (11) in the direction of rotation in which the positioning nut (17) must be turned for further extension of the inner tube (12), characterized in that the lowering sleeve (15) is lockable against rotation in both directions of rotation in the extended position by at least one and preferably two rotary latches (21, 21') arranged in an axially extending elongate slot provided in the threaded region of the outer tube (11) or in several such slots (18) which are arranged distributed around the circumference, wherein the rotary latches are braced in the circumferential direction at the axially extending edges (22) of the elongate slots (18), wherein the elongate slot or slots are preferably the elongate slots (18) which are already provided for the latch bolt (13, 13') and wherein the rotary latches (21, 21') are preferably arranged in the elongate slots (18) directly adjacent the associated latch bolts (13, 13') in an axial direction.

2. Telescopic support in accordance with claim 1, characterized in that the rotary latch or rotary latches (21, 21') is or are arranged relative to the lowering sleeve (15) on the latter so that they are substantially movable in its circumferential direction, but are however fixedly connectable with the lowering sleeve (15) in the extended position of the latter in a releasable manner ; and that the rotary latch or latches (21, 21') are in particular clampable with the lowering sleeve (15) by displacement in essentially the circumferential direction into the extended support region (19).

3. Telescopic support in accordance with claim 2, characterized in that a screw-like support surface (23) which extends concentrically to the central axis (30) of the tubes (11, 12) is provided on the lowering sleeve (15) for the support of the latch bolt (13), and/or of the latch bolts (13') and has a steepness such that on rotating the lowering sleeve (15) from the extended position into the lowering position the inner tube (12) executes the full lowering movement required relative to the outer tube (11) in the axial direction to release the telescopic support (24), with this lowering movement preferably having an extent from 2 to 5 cm, in particular 2.5 to 4 cm and in particularly advantageous manner of approximately 3 cm ; in that the threaded part of the outer tube (11) has in particular two diametrically oppositely disposed parallel elongate slots (18) into which a latch bolt (13, 13') which is braced on the lowering sleeve (15) engages ; and in that two identical support surfaces (23) formed as screw tracks are provided on the lowering sleeve (15) and extend behind one another in the circumferential direction over substantially 180 degrees each.

4. Telescopic support in accordance with one of the preceding claims, characterized in that the rotary latches (21, 21') have a support part (25) which contacts the support surface (23) of the lowering sleeve (15) and is arranged between the latch bolt (13, 13') and the support surface (23) so that the latch bolt (13, 13') is supported on the support surface (23) via the support part (25) ; and in that the support part (25) has a slide surface (27) which can slide on the support surface (23) in the circumferential direction ; and/or in that the latch bolt (13, 13') is braced in the extended position in self-locking manner on the support surface (23), optionally via the support part (25), wherein the support surface (23) which is formed as a screw track preferably merges in the peripheral direction adjoining the extension support region (19) into a region (26) which drops away more steeply and which is no longer self-locking.

5. Telescopic support in accordance with claim 4, characterized in that the rotary latch (21, 21') has, in addition to the slide surface (27) of the support part (25) which bears on the support surface (23) of the lowering sleeve (15), a clamping surface (29) which is arranged in the area of the extended support region (19) and which bears on a counter-clamping surface (28) of the lowering sleeve (15) in the opposite axial direction, wherein the support surface (23) and the counter-clamping surface (28) of the lowering sleeve (15) preferably have relative to one another, at the extended support region (19), a slight wedge angle ($\alpha$), which converges in the direction in which the screw track drops away, the angle preferably amounting from 2 to 6 degrees, in particular from 3 to 5 degrees and particularly advantageously to approximately 4 degrees.

6. Telescopic support in accordance with claim 4 or 5, characterized in that the inclination of the support surface (23) of the lowering sleeve (15) which is formed as a screw track amounts, relative to the perpendicular (42) to the central axis (30) in the circumferential direction to an angle in the region of the extended support region (19) of from 5 to 10 degrees, in particular 7 to 8 degrees, particularly preferably to approximately 7.5 degrees, and/or in that the inclination of the clamping surface (29) and of the counter-clamping surface (28) relative to the perpendicular to the central axis (30) in the circumferential direction amounts in the region of the extended support region (19) to from 1 to 5 degrees, in particular from 2 to 4 degrees and particularly advantageously to 2.5 to 3.5 degrees.

7. Telescopic support in accordance with one of the preceding claims, characterized in that the rotary latch (21) has a U-shaped cross section the one limb of which forms the support part (25), the web of which forms the part (31) which engages in the elongate slot and the other limb (43) of which forms the clamping surface (29), or in that the rotary latch (21') is formed as a slide shoe which is arranged in a groove (34) formed in the inner surface of the lowering sleeve (15), with the lower edge of the groove forming the support surface (23) and with the upper edge of the groove forming the counter clamping surface (28) and preferably also a restriction surface (37) adjoining it in the circumferential direction, with the restriction surface restricting the movement of the rotary latch (21') in the axial direction away from the support surface (23).

8. Telescopic support in accordance with one of the claims 2 to 7, characterized in that the latch bolt (13, 13') forms a component of the rotary latch (21, 21') which engages radially away from the rotary latch (21, 21')

towards the inside into the associated recess (14) of the inner tube (12) and can be retracted out of this position, wherein the latch bolt (13, 13') and the rotary latch (21, 21') are in particular firmly connected to one another and are preferably in one piece ; and in that the rotary latch (21, 21') can be moved away from the inner tube (12) at least sufficiently far that the latch bolt (13, 13') comes out of engagement with the inner tube (12) ; and in that the movement of the rotary latch (21, 21') away from the support surface (23) is expediently restricted by a restriction surface (37) which generally extends in accordance with the support surface (23) and which preferably continuously merges into the counter-clamping surface (28).

9. Telescopic support in accordance with claim 8, characterized in that an angular release region (33) of preferably 20 to 40 degrees, and in particular approximately 30 degrees joins in the peripheral direction onto the angular lowering region (32) which should have an angular circumference of 140 to 160 degrees and in particular approximately 150 degrees ; with the restriction surface (37) being interrupted within the angular release region (33) in such a way that the rotary latch (21, 21') is displaceable so far in the direction of extraction movement of the inner tube (12) that the latch bolt (13, 13') comes out of engagement with the associated recess (14), wherein the support surface (23) preferably merges adjoining the lowering region (32) within the angular release region (33) into a comparatively short rising region within which the rotary latch (21, 21') is displaced upwardly and the latch bolt (13, 13') is simultaneously displaced radially outwardly, and in that an abutment step (35) is in particular provided in the support surface (23) at the end of the lowering region (32) and/or at the start of the rising region (33).

10. Telescopic support in accordance with one of the claims 7 to 9, characterized in that the rotary latch (21, 21') which is preferably outwardly curved is guided in an arcuate manner with a considerable axial and radial component such that the latch bolt (13, 13') engages into an associated recess (14) in the one end position and is out of engagement with the inner tube (12) in a further release position which has a clear axial spacing from the above named end position, in that the path of movement of the rotary latches (21, 21') is preferably restricted by abutments (38) in essentially the axial direction, and/or in that the recesses in the inner tube (12) are merely depressions (14').

## Revendications

1. Support téléscopique (24) à longueur variable et propre à être chargé en compression, en particulier destiné à supporter des coffrages (39) à une distance définie d'une surface de support fixe (40), le support télescopique comprenant un tube extérieur (11) et un tube intérieur (12) qui est déplaçable de façon télescopique à l'intérieur de celui-ci et qui présente à sa surface latérale au moins un évidement porteur et de préférence plusieurs évidements porteurs (14) qui sont distribués sur sa longueur et qui ont en particulier le même espacement, dans lequel au moins un pion de blocage (13, 13') s'engage à travers une et de préférence deux fentes allongées (18) prévues dans l'extrémité filetée du tube extérieur (11) dans l'un au moins des évidements porteurs, le pion de blocage (13, 13') étant supporté sur le tube extérieur (11) via une surface de support (23) sur un fourreau d'abaissement (15) qui entoure à coulissement l'extrémité du tube extérieur (11) qui est tournée vers le tube intérieur (12) et via un écrou de positionnement (17) pourvu d'un taraudage interne (41) qui est agencé sur un filetage externe (16) prévu à cette extrémité du tube extérieur (11) ; dans lequel la surface de support (23) du fourreau d'abaissement (15) pour le pion de blocage (13, 13') comprend au moins deux régions de support (19, 20) qui sont écartées l'une de l'autre dans la direction circonférentielle, en fait une région de support en extension (19) et une région de support en abaissement (20), lesquelles peuvent, par rotation convenable du fourreau d'abaissement (15) par rapport au tube extérieur (11) prendre sélectivement le supportage du pion de blocage (13, 13') dans les positions d'extension et d'abaissement respectivement, et dans lequel le fourreau d'abaissement (15) est, dans la position d'extension dans laquelle le tube intérieur (12) est aussi loin que possible en extension, verrouillé en rotation par rapport au tube extérieur (11) dans la direction de rotation dans laquelle l'écrou de positionnement doit être tourné pour augmenter l'extension du tube intérieur (12), caractérisé en ce que le fourreau d'abaissement (15) peut être verrouillé en rotation dans les deux directions de rotation dans la position d'extension par au moins un et de préférence deux verrous rotatifs (21, 21') agencés dans une fente allongée s'étendant axialement ménagée dans la région filetée du tube extérieur (11), ou dans plusieurs telles fentes (18) qui sont distribuées autour de la circonférence, dans lequel les verrous rotatifs sont supportés en direction circonférentielle sur les bords (22) axiaux des fentes allongées (18), dans lequel la, ou les fentes allongées sont de préférence les fentes (18) qui sont déjà prévues pour le pion de blocage (13, 13'), et dans lequel les verrous rotatifs (21, 21') sont de préférence agencés dans les fentes allongées (18) directement adjacents en direction axiale aux pions de blocage (13, 13') associés.

2. Support téléscopique selon la revendication 1, caractérisé en ce que le, ou les verrous rotatifs (21, 21') sont agencés par rapport au fourreau d'abaissement (15) sur celui-ci de manière à être essentiellement mobiles en direction circonférentielle, mais peuvent toutefois être reliés, de façon démontable, au fourreau d'abaissement (15) dans la position d'extension de celui-ci, le, ou les verrous rotatifs (21, 21') pouvant en particulier être coincés avec le fourreau d'abaissement (15) par déplacement essentiellement dans la direction circonférentielle jusque dans la région de support en extension (19).

3. Support téléscopique selon la revendication 2, caractérisé en ce qu'il est prévu une surface de support (23) en forme de vis, concentrique à l'axe central (30) des tubes (11, 12), sur le fourreau d'abaissement (15) afin de supporter le, ou les pions de blocage (13 ; 13'), cette surface de support ayant une pente telle que, en tournant le fourreau d'abaissement (15) depuis la position d'extension jusqu'à la position d'abaissement, le tube intérieur (12) exécute la totalité du déplacement d'abaissement en direction axiale par rapport au tube extérieur (11) requis pour libérer le support téléscopique (24), ce déplacement d'abaissement ayant de préférence une course de 2 à 5 cm, en particulier de 2,5 à 4 cm et de façon particulièrement avantageuse d'environ 3 cm ; en ce que la partie filetée du tube extérieur (11) comporte en particulier deux fentes allongées parallèles diamétralement opposées (18) dans lesquelles s'engage un pion de blocage respectif (13, 13') supporté sur le fourreau d'abaissement (15) ; et en ce que deux surfaces de support (23) identiques formées à la manière de pas de vis sont prévues sur le fourreau d'abaissement (15) et s'étendent l'une derrière l'autre dans la direction circonférentielle, chacune sur pratiquement 180°.

4. Support téléscopique selon l'une quelconque des revendications précédentes, caractérisé en ce que les verrous rotatifs (21, 21') ont une partie de support (25) qui est en contact avec la surface de support (23) du fourreau d'abaissement (15) est est agencée entre le pion de blocage (13, 13') et la surface de support (23) de telle sorte que le pion de blocage (13, 13') est supporté sur la surface de support (23) via la partie de support (25) ; et en ce que la partie de support (25) présente une surface de coulissement (27) capable de coulisser sur la surface de support (23) en direction circonférentielle ; et/ou en ce que le pion de blocage (13, 13') prend appui en condition d'extension sur la surface de support (23) de manière autobloquante, éventuellement via la partie de support (25), la surface de support (23) formée à la manière d'un pas de vis se transformant en direction périphérique à la suite de la région de support en extension (19) en une région (26) qui tombe avec une pente plus abrupte et n'est plus autobloquante.

5. Support téléscopique selon la revendication 4, caractérisé en ce que le verrou rotatif (21, 21') présente, en plus de la surface de coulissement (25) qui est en appui sur la surface de support (23) du fourreau d'abaissement (15), une surface de coincement (29) qui est agencée dans la zone de la surface de support en extension (19) et qui est en appui sur une contre-surface de coincement (28) du fourreau d'abaissement (15) dans la direction axiale opposée, la surface de support (23) et la contre-surface de coincement (28) du fourreau d'abaissement (15) formant de préférence l'une par rapport à l'autre dans la région de support en extension (19) un léger angle en coin ($\alpha$) qui converge dans la direction dans laquelle le pas de vis tombe, l'angle étant de préférence entre 2 et 6°, en particulier entre 3 et 5°, et de façon particulièrement avantageuse environ 4°.

6. Support téléscopique selon l'une des revendications 4 ou 5, caractérisé en ce que l'inclinaison de la surface de support (23) du fourreau d'abaissement (15), qui est formée à la manière d'un pas de vis, par rapport à la perpendiculaire (42) à l'axe central (30) en direction circonférentielle et dans la zone de la région de support en extension (19) s'élève à 5 à 10°, en particulier 7 à 8°, et de façon particulièrement préférée environ 7,5°, et/ou en ce que l'inclinaison de la surface de coincement (29) et de la contre-surface de coincement (28) par rapport à la perpendiculaire à l'axe central (30) en direction circonférentielle et dans la zone de la région de support en extension (19) s'élève à 1 à 5°, en particulier 2 à 4°, et de façon particulièrement avantageuse à 2,5 à 3,5°.

7. Support téléscopique selon l'une quelconque des revendications précédentes, caractérisé en ce que le verrou rotatif (21) a une section transversale en U, l'une de ses jambes formant la partie de support (25), son âme formant la partie (31) qui engage la fente allongée et son autre jambe (43) formant la surface de coincement (29), ou en ce que le verrou rotatif (21') est formé en tant qu'un sabot coulissant qui est agencé dans une gorge (34) formée dans la surface intérieure du fourreau d'abaissement (15), la bordure inférieure de la gorge formant la surface de support (23) et la bordure supérieure de la gorge formant la contre-surface de coincement (28) ainsi que de préférence une surface de limitation (37) qui lui fait suite en direction circonférentielle, la surface de limitation limitant le déplacement du verrou rotatif (21') en direction axiale et en éloignement de la surface de support (23).

8. Support téléscopique selon l'une quelconque des revendications 2 à 7, caractérisé en ce que le pion de blocage (13, 13') forme un composant du verrou rotatif (21, 21') qui s'engage radialement en éloignement du verrou rotatif et vers l'intérieur dans l'évidement associé (14) du tube intérieur (12) et peut être rétracté hors de cette position, le pion de blocage (13, 13') et le verrou rotatif (21, 21') étant en particulier solidairement liés l'un à l'autre et de préférence d'une seule pièce ; et en ce que le verrou rotatif (21, 21') peut être déplacé en éloignement du tube intérieur (12) au moins suffisamment loin pour que le pion de blocage (13, 13') puisse se dégager du tube intérieur (12), et en ce que le déplacement du verrou rotatif (21, 21') en éloignement de la surface de support (23) est limité de façon appropriée au moyen d'une surface de limitation (37) qui s'étend en général suivant la surface de support (23) et de préférence se transforme de façon continue dans la contre-surface de coincement (28).

9. Support téléscopique selon l'une quelconque des revendications précédentes, caractérisé en ce qu'une zone de libération angulaire (33), de préférence de 20 à 40° et en particulier de 30° environ, fait suite en direction circonférentielle à la région angulaire d'abaissement (32), qui devrait avoir une étendue angulaire de 140 à 160° et en particulier environ 150° ; la surface de limitation (37) étant interrompue à l'intérieur de la zone de libération angulaire (33) de telle manière que le verrou rotatif (21, 21') peut être déplacé dans la direction du mouvement d'extraction du tube intérieur (12) aussi loin que le pion de blocage (13, 13') se dégage de l'évidement associé (14), la surface de support (23) se transformant de préférence au voisinage de la région d'abaissement (32) et dans la zone de libération angulaire (33) en une zone de soulèvement comparablement courte à l'intérieur de laquelle le verrou rotatif (21, 21') est déplacé vers le haut et simultanément le pion de blocage (13, 13') est déplacé radialement vers l'extérieur, et en ce qu'un gradin de butée (35) est en particulier prévu sur la surface de support (23) à l'extrémité de la région d'abaissement (32) et/ou au début de la zone de soulèvement (33).

10. Support téléscopique selon l'une quelconque des revendications 7 à 9, caractérisé en ce que le verrou rotatif (21, 21'), qui est de préférence recourbé vers l'extérieur, est guidé de manière courbe avec une forte composante axiale et radiale de sorte que le pion de blocage (13, 13') s'engage dans un évidement associé (14) dans l'une des positions extrêmes et est dégagé par rapport au tube intérieur (12) dans une autre position de libération qui est nettement espacée axialement de la position extrême précitée, en ce que le trajet de déplacement des verrous rotatifs (21, 21') est de préférence limité par des butées (38) essentiellement en direction axiale, et/ou en ce que les évidements dans le tube intérieur (12) sont simplement des dépressions (14').

# FIG .1

# FIG.2

FIG.3

FIG.4

EP 0 390 128 B1

# FIG . 5

# FIG.6

# FIG.7

EP 0 390 128 B1

## FIG.7a

## FIG.7b

## FIG.7c

## FIG.7d

FIG.8

FIG.9

FIG.10